# EUROPEAN PATENT APPLICATION

(11) **EP 4 723 665 A1**
(43) Date of publication of application: **08.04.2026**
(21) Application number: 24822631.8
(22) Date of filing: 06.06.2024
(51) Int. Cl.: H04Q 11/00

(54) **COMMUNICATION METHOD, DEVICE, SYSTEM, AND STORAGE MEDIUM**

(30) Priority: 13.06.2023 CN 202310703136
(71) Applicant: ZTE Corporation, Shenzhen, Guangdong 518057 (CN)
(72) Inventor: JIANG, Yi, Shenzhen, Guangdong 518057 (CN); ZHANG, Weiliang, Shenzhen, Guangdong 518057 (CN); YUAN, Liquan, Shenzhen, Guangdong 518057 (CN); HUANG, Xingang, Shenzhen, Guangdong 518057 (CN)
(74) Representative: Aipex B.V.
(86) International application number: PCT/CN2024/097757
(87) International publication number: WO 2024/255680

(57) **Abstract**

Provided are a communication method, device, and system and a storage medium. The method applied to a communication system includes splitting different optical power loss levels from optical path loss levels formed by a first loss value and a second loss value of an optical distribution network of a passive optical network system, where the minimum value and the maximum value of each optical power loss level are each greater than or equal to the first loss value and less than or equal to the second loss value, the first loss value is the minimum optical path loss of the optical distribution network, and the second loss value is the maximum optical path loss of the optical distribution network; and connecting different first communication devices to the passive optical network system according to the different optical power loss levels.

## Description

### TECHNICAL FIELD

The present application relates to the field of communications technology, for example, a communication method, device, and system and a storage medium.

### BACKGROUND

In a passive optical network (PON), the power loss between an optical line terminal (OLT) and an optical network unit (ONU) varies with factors including the distance of the optical distribution network (ODN), the split ratio, and the cascading levels of optical splitters. Different transmitters in the OLT have different transmit margins, resulting in significant differences in the receive optical power at ONUs deployed at different locations under the same standard specifications. This leads to uneven reception performance, suboptimal utilization of network resources, and problems such as high overall network cost and power consumption in the PON system while the utilization rate remains low.

### SUMMARY

Embodiments of the present application provide a communication method, device, and system and a storage medium, thereby ensuring the quality of service for users, improving the communication capability of the system, and reducing the overall cost and power consumption of the system.

Embodiments of the present application provide a communication method applied to a communication system. The method includes splitting different optical power loss levels from optical path loss levels formed by a first loss value and a second loss value of an optical distribution network of a passive optical network system, where the minimum value and the maximum value of each optical power loss level are each greater than or equal to the first loss value and less than or equal to the second loss value, the first loss value is the minimum optical path loss of the optical distribution network, and the second loss value is the maximum optical path loss of the optical distribution network; and connecting different first communication devices to the passive optical network system according to the different optical power loss levels.

Embodiments of the present application provide a communication method applied to a communication system. The method includes splitting different optical power loss levels from optical path loss levels formed by a first loss value and a second loss value of an optical distribution network of a passive optical network system, where the minimum value and the maximum value of each optical power loss level are each greater than or equal to the first loss value and less than or equal to the second loss value, the first loss value is the minimum optical path loss of the optical distribution network, and the second loss value is the maximum optical path loss of the optical distribution network; and determining configuration content of a second communication device according to different optical power level indication information, where optical power level indication information of the different optical power level indication information indicates an optical power loss level used by a first communication device.

Embodiments of the present application provide a first communication device. The first communication device includes a memory and at least one processor. The memory is configured to store at least one program. When executed by the at least one processor, the at least one program causes the at least one processor to perform the communication method of any previous embodiment.

Embodiments of the present application provide a second communication device. The second communication device includes a memory and at least one processor. The memory is configured to store at least one program. When executed by the at least one processor, the at least one program causes the at least one processor to perform the communication method of any previous embodiment.

Embodiments of the present application provide a communication system. The communication system includes a first communication device and a second communication device. A receive sensitivity of the first communication device corresponds to at least one optical power loss level; or a transmit optical power of the first communication device corresponds to an optical power loss level. The first communication device is configured to report an optical power loss level and receive configuration content sent by the second communication device. The second communication device is configured to determine and send configuration content of each first communication device according to the optical power loss level of each first communication device. The second communication device is also configured to perform corresponding configuration and data transmission of the second communication device according to the optical power loss level of each first communication device.

Embodiments of the present application provide a storage medium storing a computer program which, when executed by a processor, causes the processor to perform the communication method of any previous embodiment.

### BRIEF DESCRIPTION OF DRAWINGS

FIG. 1 is a flowchart of a communication method according to embodiments of the present application.
FIG. 2 is a flowchart of a communication method according to embodiments of the present application.
FIG. 3 is a diagram illustrating the structure configuration of a PON system according to embodiments of the present application.
FIG. 4 is a diagram illustrating a mapping relationship between an optical power loss level and a receive sensitivity according to embodiments of the present application.
FIG. 5 is a diagram illustrating a mapping relationship between an optical power loss level and a receive sensitivity between an OLT and each ONU according to embodiments of the present application.
FIG. 6 is a diagram illustrating the configuration of a PON system divided according to optical power loss levels according to embodiments of the present application.
FIG. 7 is a block diagram of a communication apparatus according to embodiments of the present application.
FIG. 8 is a block diagram of a communication apparatus according to embodiments of the present application.
FIG. 9 is a block diagram of a communication system according to embodiments of the present application.
FIG. 10 is a diagram illustrating the structure of a communication device according to embodiments of the present application.

### DETAILED DESCRIPTION

Embodiments of the present application are described hereinafter in conjunction with drawings. The present application is described hereinafter in conjunction with embodiments and drawings. The examples illustrated are intended to explain the present application.

In a PON system, an optical splitter splits a single transmitted optical signal such that the signal is transmitted in multiple optical paths, enabling multiple users to share network resources. Meanwhile, the PON system defines multiple different optical link budget levels to accommodate various network requirements and application scenarios such as different transmission rates, transmission distances, numbers of users, and bandwidth resources. Generally, a higher link budget level corresponds to longer fiber lengths and more splitters, resulting in longer transmission distances of optical signals and higher costs.

In a PON system, a fixed downlink rate is used. For example, in G.9804.3, the fixed downlink rate is 49.7664 Gbit/s. For N1/C+ two different optical power budget levels defined in the standard, in the downlink direction, except that the transmit optical power C+ level of the OLT transmit end is 3 dB higher than the transmit optical power N1 level, the sensitivity requirements of the ONU receive side are completely the same; and in the uplink direction, at the same line rate, except that the receive sensitivity C+ level of the OLT receive end is 3 dB higher than the receive sensitivity N1 level, the transmit optical power requirements of the ONU transmit side are completely the same, and certainly, different uplink line rates correspond to different transmit optical powers and receive sensitivities.

Although multiple different optical power budgets exist in the PON system, their corresponding coverage distances are generally fixed, for example, DD20 (20 km) or DD40 (40 km), and the same line coding, such as Non-Return-to-Zero (NRZ) line coding, is used. Since in the PON system, an ONU receiver adopts a single sensitivity standard value regardless of N1 or C+, all ONU receivers must comply with the same specification. This sensitivity standard value is set according to the worst-case ODN scenario, resulting in that the optical power received by most ONUs is significantly higher than the required receive sensitivity. Moreover, for the same optical power budget, all ONU transmitters are at the same average optical power transmit level, without accounting for the actual power loss between the OLT and ONU. This not only increases the overall PON system cost but also prevents power consumption reduction.

To improve the PON system capacity while ensuring basic user quality of service and to reduce the overall system cost and power consumption, the present application provides a communication method, system, and device for flexibly configuring the PON system.

In the Common Transmission Convergence (ComTC) standard, there are two definitions related to power indication. One is the ODN class (3 bits) in the OC body data block of the downstream physical synchronization block (PSBd) in the downstream frame header, used to identify the ODN level supported by the transmitter and receiver as defined in the physical layer standard. The other is the minimum and maximum values (ONURssiMin and ONURssiMax) of the ONU received signal strength indicator defined in the Burst_Profile message. During ONU activation and registration, when the optical power signal transmitted by the ONU is received by the OLT Channel Termination (CT), the OLT measures its received signal strength indicator (RSSI) and bit error rate (BER). When both the RSSI and the BER meet the registration criteria, the OLT sends an SN_ONU Physical Layer Operations, Administration, and Maintenance (PLOAM) message. The ONU sends the corresponding SN_ONU message and completes activation and registration only if its RSSI satisfies ONURssiMin < RSSI < ONURssiMax. Other than these, the current ComTC and physical layer standards contain no additional definitions related to power indication.

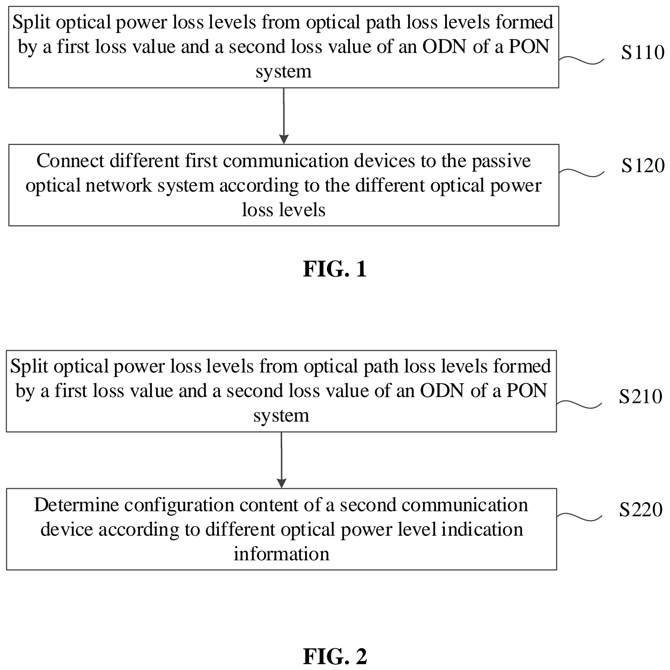

In an embodiment, FIG. 1 is a flowchart of a communication method according to embodiments of the present application. This embodiment is applied to the case of flexibly configuring a PON system. This embodiment is applied to a communication system. The communication system may be a PON system. As shown in FIG. 1, this embodiment includes S110 and S120.

In S110, optical power loss levels are split from optical path loss levels formed by a first loss value and a second loss value of an optical distribution network (ODN) of a passive optical network (PON) system.

The minimum value and the maximum value of each optical power loss level are both greater than or equal to the first loss value and less than or equal to the second loss value. The first loss value is the minimum optical path loss of the optical distribution network. The second loss value is the maximum optical path loss of the optical distribution network.

In an embodiment, the minimum optical path loss (that is, the first loss value) and the maximum optical path loss (that is, the second loss value) of the optical distribution network form optical path loss levels. The optical path loss levels are split to obtain several optical power loss levels. Both the minimum value and the maximum value of each optical power loss level are greater than or equal to the first loss value and less than or equal to the second loss value so that both the minimum value and the maximum value of each optical power loss level are in a value interval formed by optical path loss levels. That is, the minimum value and the maximum value of each optical power loss level form a corresponding value subinterval. The value interval includes several value subintervals. In an embodiment, there may be no intersection between every two adjacent optical power loss levels, or there may be a partial overlapping region between every two adjacent optical power loss levels.

In S120, different first communication devices are connected to the passive optical network system according to the different optical power loss levels.

In an embodiment, different first communication devices are connected to the PON system according to the optical power loss levels.

In an embodiment, the different first communication devices include first communication devices with different receive sensitivities; or first communication devices with different transmit optical powers. In an embodiment, the optical power loss of the first communication device at each location in the passive optical network system is monitored, the optical power loss level to which the optical power loss belongs is determined, and then a first communication device with proper receive sensitivity is selected to access the PON system, or a first communication device with proper transmit optical power is selected to access the PON system.

In an embodiment, the communication method applied to the first communication device in the communication system also includes reporting optical power level indication information to a second communication device, where the optical power level indication information indicates an optical power loss level used by the first communication device; and receiving configuration content of the first communication device determined by the second communication device according to the optical power level indication information.

The optical power level indication information may be directly used to indicate the minimum value and the maximum value corresponding to the optical power loss level used by the first communication device, or a level identifier may be directly used to indicate the optical power loss level used by the first communication device. By way of example, assuming that the minimum value and the maximum value corresponding to an optical power loss level (for example, loss level 1) are 14 dB and 16 dB respectively, then 14 dB and 16 dB may be directly carried in the optical power level indication information. The second communication device may directly determine, according to 14 dB and 16 dB, that the optical power loss level used by the first communication device is loss level 1; or may directly use a level identifier (identifier 1) to indicate loss level 1, that is, send identifier 1 to the second communication device so that the second communication device can determine, according to the identifier, that the optical power loss level used by the first communication node is loss level 1.

In an embodiment, each first communication device reports, to the second communication device, optical power level indication information that indicates an optical power loss level used by the first communication device, so that the second communication device determines, according to the optical power level indication information, the optical power loss level used by each first communication device and determines, according to the optical power loss level, the configuration content corresponding to the first communication device.

In an embodiment, the optical power level indication information indicates a mapping relationship between an optical power loss level and at least one receive sensitivity. In an embodiment, the optical power level indication information may be used to indicate a mapping relationship between one determined receive sensitivity and multiple optical power loss levels or used to indicate a mapping relationship between one optical power loss level and multiple receive sensitivities. By way of example, one determined receive sensitivity (for example, -24 dBm) corresponds to multiple optical power loss levels (for example, loss levels 0 to 3), or one determined receive sensitivity (for example, -27 dBm) corresponds to multiple optical power loss levels (for example, loss levels 7 to 9). Since a lower-performance receiver can be replaced with a higher-performance receiver, for example, a receiver with a receive sensitivity of -27 dBm can replace a receiver with a receive sensitivity of -24 dBm, that is, one optical power loss level can correspond to multiple receive sensitivities.

In an embodiment, the optical power level indication information indicates a mapping relationship between an optical power loss level and at least one transmit optical power. In an embodiment, it is feasible to determine multiple transmit optical powers according to the optical power loss level of the optical distribution network (ODN) and establish a mapping relationship between different optical power loss levels and at least one transmit optical power.

In an embodiment, in a downlink direction, the configuration content determined according to the optical power level indication information includes at least one of the following: forward error correction (FEC) decoding, a demodulation scheme, a line rate, or an operating wavelength.

In an embodiment, in the downlink direction of the passive optical network, at least two different types of FEC decoding may be configured to match optical network units of various optical power loss levels. For example, at least two different types of FEC decoding may be configured in one frame according to different time slots; or FEC decoding may be the same in the same frame but may be the same or different in different downlink frames.

In an embodiment, in the downlink direction of the passive optical network, various line rates may be configured to match optical network units with various optical power loss levels. For example, for an optical link with an optical power loss level supporting a higher line rate, the link rate may be configured as required to not exceed the maximum link rate supported by the optical link; and for an optical link supporting multiple line rates, signal transmission may be switched at various line rates.

In an embodiment, in the downlink direction of the passive optical network, at least two different demodulation schemes are configured to match optical network units with various receive optical power loss levels. For an optical link with a low optical power loss level, data transmission may be performed at a higher line rate using a higher-order demodulation scheme; and for an optical link with a high optical power loss level, data transmission may be performed at a stable line rate using a lower-order demodulation scheme.

In an embodiment, in the downlink direction of the passive optical network, at least two different operating wavelengths may be configured to match optical network units with different optical power loss levels.

In an embodiment, in the downlink direction of the passive optical network, for a data frame arriving at the first communication device, if the optical power loss received by the first communication device or the optical power loss level indicated by the frame header of the first communication device does not meet the receive sensitivity specification of the first communication device, then the first communication device automatically discards the received data frame. Otherwise, the next step is performed.

In an embodiment, in an uplink direction, the configuration content determined according to the optical power level indication information includes at least one of the following: transmit optical power, FEC coding, a modulation scheme, a line rate, or an operating wavelength.

In an embodiment, in the uplink direction of the PON, at least two different types of FEC coding may be configured to match optical network units of various optical power loss levels. For example, at least two different types of FEC coding may be configured in one frame according to different time slots; or FEC coding may be the same in the same frame but may be the same or different in different downlink frames.

In an embodiment, in the uplink direction of the passive optical network, various line rates may be configured to match optical network units with various optical power loss levels. For example, for an optical link with an optical power loss level supporting a higher line rate, the link rate may be configured as required to not exceed the maximum link rate supported by the optical link; and for an optical link supporting multiple line rates, signal transmission may be switched at various line rates.

In an embodiment, in the uplink direction of the PON, at least two different modulation schemes are configured to match optical network units with various receive optical power loss levels. For an optical link with a low optical power loss level, data transmission may be performed at a higher line rate using a higher-order modulation scheme; and for an optical link with a high optical power loss level, data transmission may be performed at a stable line rate using a lower-order modulation scheme.

In an embodiment, in the uplink direction of the PON, at least two different operating wavelengths may be configured to match optical network units with different optical power loss levels.

In an embodiment, FIG. 2 is a flowchart of a communication method according to embodiments of the present application. This embodiment is applied to the case of flexibly configuring a PON system. This embodiment is applied to a communication system. The communication system may be a PON system. As shown in FIG. 2, this embodiment includes S210 and S220.

In S210, optical power loss levels are split from optical path loss levels formed by a first loss value and a second loss value of an optical distribution network (ODN) of a passive optical network (PON) system.

The minimum value and the maximum value of each optical power loss level are both greater than or equal to the first loss value and less than or equal to the second loss value. The first loss value is the minimum optical path loss of the optical distribution network. The second loss value is the maximum optical path loss of the optical distribution network.

In S220, configuration content of a second communication device is determined according to different optical power level indication information.

The optical power level indication information indicates an optical power loss level used by the first communication device.

In an embodiment, optical power level indication information is used to indicate the optical power loss level used by the first communication device. That is, the number of pieces of optical power level indication information is related to the number of first communication devices in the PON system. It is feasible to use one piece of optical power level indication information to indicate the optical power loss level used by one first communication device or use one piece of optical power level indication information to indicate the optical power loss levels used by multiple first communication devices. Generally, one piece of optical power level indication information is used to indicate the optical power loss level used by one first communication device. In an embodiment, the second communication device in the PON system determines the configuration content of the second communication device according to different optical power level indication information so that data transmission can be performed by using parameters corresponding to the configuration content.

In an embodiment, the communication method applied to the second communication device in the communication system also includes receiving optical power level indication information reported by the first communication device; and determining and sending configuration content of the first communication device according to the optical power level indication information. In an embodiment, each first communication device in the PON system reports the optical power level indication information of the first communication device to the second communication device, and the second communication device determines configuration content corresponding to the first communication device according to different optical power level indication information and sends the configuration content to the corresponding first communication device so that the first communication device can perform data transmission according to the configuration content.

In an embodiment, in a downlink direction, the configuration content determined according to the optical power level indication information includes at least one of the following: forward error correction (FEC) coding, a modulation scheme, a line rate, or an operating wavelength.

In an embodiment, in an uplink direction, the configuration content determined according to the optical power level indication information includes at least one of the following: FEC decoding, a demodulation scheme, a line rate, or an operating wavelength.

In an embodiment, the optical power level indication information indicates a mapping relationship between an optical power loss level and at least one receive sensitivity.

In an embodiment, the optical power level indication information indicates a mapping relationship between an optical power loss level and at least one transmit optical power.

For explanations of parameters such as an optical power loss level, optical power level indication information, and configuration content indicated by the optical power level indication information in the communication method applied to the second communication device, see descriptions of corresponding parameters in the preceding communication method applied to the first communication device.

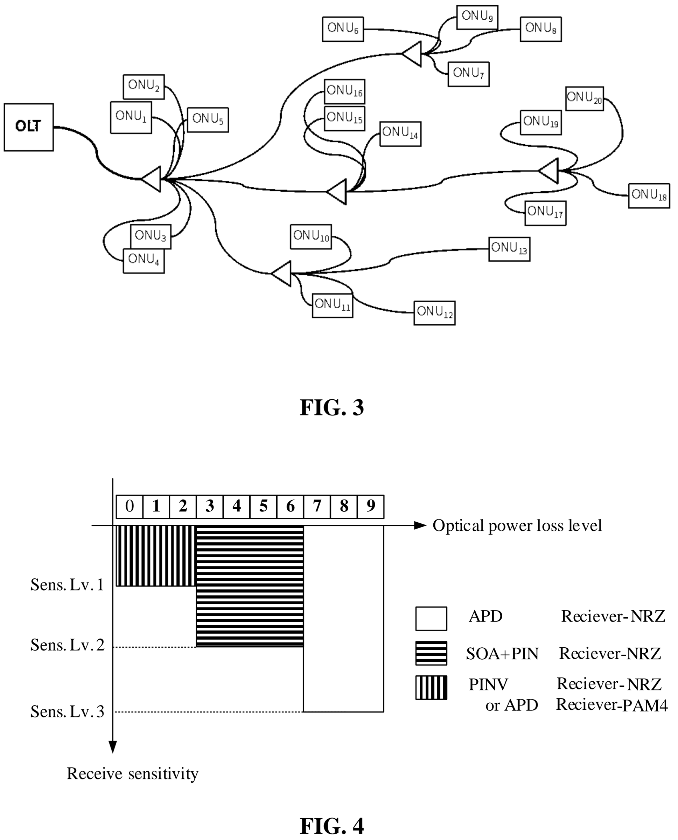

In an embodiment, FIG. 3 is a diagram illustrating the structure configuration of a PON system according to embodiments of the present application. In this embodiment, the structure of a PON system is described using an example in which the communication system is a PON system, the first communication device is an OLT, and the second communication device is an ONU. As shown in FIG. 3, one OLT and 20 ONUs are configured in the PON system. ONU17, ONU18, ONU19, and ONU20 are farthest from the OLT, and ONU1, ONU2, ONU3, ONU4, and ONU5 are closest to the OLT.

In an embodiment, FIG. 4 is a diagram illustrating a mapping relationship between an optical power loss level and a receive sensitivity according to embodiments of the present application. As shown in FIG. 4, the receive sensitivities may be divided into three levels, namely Sens.Lv.1, Sens.Lv.2, and Sens.Lv.3; and the optical power loss levels may be divided into ten levels, namely loss level 0, loss level 1, loss level 2, loss level 3, ..., loss level 8, and loss level 9. One determined receive sensitivity may correspond to multiple optical power loss levels. For example, Sens.Lv.1 corresponds to three optical power loss levels (loss level 0, loss level 1, and loss level 2), Sens.Lv.2 corresponds to four optical power loss levels (loss level 3, loss level 4, loss level 5, and loss level 6), and Sens.Lv.3 corresponds to three optical power loss levels (loss level 7, loss level 8, and loss level 9).

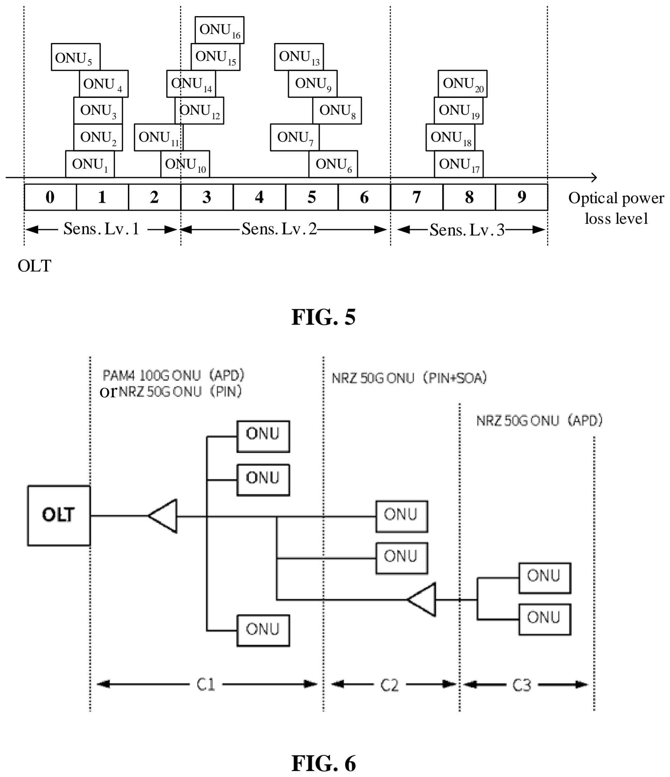

In an embodiment, FIG. 5 is a diagram illustrating a mapping relationship between an optical power loss level and a receive sensitivity between an OLT and each ONU according to embodiments of the present application. This embodiment describes a mapping relationship between an optical power loss level and a receive sensitivity between the OLT and each ONU in the PON system shown in FIG. 3. As shown in FIG. 5, one determined sensitivity may correspond to multiple optical power loss levels: The optical power loss levels of ONU1, ONU2, ONU3, ONU4, and ONU5 are relatively small, and correspondingly, the receive sensitivity may be relatively low and is configured as Sens.Lv.1; the optical power loss levels of ONU10, ONU11, ONU112, ONU14, ONU15, and ONU16 are larger than those of ONU1, ONU2, ONU3, ONU4, and ONU5, and correspondingly, the receive sensitivity is required to be relatively high and may be configured as Sens.Lv.1 or Sens.Lv.2; the optical power loss levels of ONU6, ONU7, ONU8, ONU9, and ONU13 are larger than those of ONU10, ONU11, ONU112, ONU14, ONU15, and ONU16, and correspondingly, the receive sensitivity is required to be relatively high and may be configured as Sens.Lv.2; and the optical power loss levels of ONU17, ONU18, ONU19, and ONU20 are larger than those of ONU6, ONU7, ONU8, ONU9, and ONU13, and correspondingly, the receive sensitivity is required to be relatively high and may be configured as Sens.Lv.3. Of course, one optical power loss level may correspond to multiple receive sensitivities. For example, the optical power loss levels of ONU1, ONU2, ONU3, ONU4, and ONU5 are relatively small, and their normal data transmission can be achieved by using the receive sensitivity Sens.Lv.1 or by using the higher receive sensitivity Sens.Lv.2 or Sens.Lv.3.

According to the communication method of this embodiment of the present application, the same PON system may have multiple modulation schemes, specifications of different receive sensitivities, and specifications of different transmit optical powers. For example, the OLT and the ONUs may use multiple modulation and demodulation schemes, line rates, FEC coding and decoding, and operating wavelengths, and the ONUs may use multiple receive sensitivities or rates. FIG. 6 is a diagram illustrating the configuration of a PON system divided according to optical power loss levels according to embodiments of the present application. As shown in FIG. 6, in the PON system, a 100G ONU using 4-level pulse amplitude modulation (PAM4) and a 50G ONU using Non-Return-to-Zero (NRZ) modulation coexist.

After the ODN of the PON system is deployed, the receive optical power at each ONU is basically determined. At the initial stage of service activation, the optical power loss from the OLT to each ONU (at the measurement point) can be obtained using a professional instrument such as an optical power meter. Accordingly, an optical power loss level can be determined according to the measured optical power loss, and an ONU with an appropriate receive sensitivity can be selected to access the PON system. Thereafter, the OLT performs ONU configuration and ONU data reception according to the optical power loss level of each ONU.

In an embodiment, the process of receiving an optical signal according to an optical power loss level is described. In the PON system, the optical signal power loss between the ONU and the OLT is affected by factors such as the fiber length, the number of cascaded splitter stages, and the split ratio of each stage between the ONU and the OLT. Accordingly, different optical power loss levels can be determined. Different fiber lengths result in different optical signal attenuations. The attenuation value A1 (dB) satisfies A1 = f2(D). The number of cascaded splitter stages (M) and the split ratio Rm of each stage also cause different optical signal attenuations. The attenuation value A2 (dB) satisfies A2 = f2(M, Rm). Other attenuation values such as those caused by connectors are represented as A3 (dB). Thus, multiple optical power loss levels can be classified with reference to the optical signal attenuation value A.

In the PON system, the attenuation value A between any ONU and the OLT can be expressed as: A = A1 + A2 + A3.

After the optical power loss levels are classified, the optical power loss level of the ONU can be determined according to the attenuation value A, and an ONU with a corresponding receive sensitivity can be used to receive and further process the optical signal at that position in the PON system.

For example, according to different optical power loss levels, three receive levels may be defined: a low receive level (C1), a medium receive level (C2), and a high receive level (C3). Each level corresponds to a different receive sensitivity. In this manner, an ONU with a low receive level only needs to use a photodetector with low sensitivity requirements, thereby significantly reducing the manufacturing costs. For example, C1 uses a PIN receiver; C2 uses a PIN + SOA receiver; and C3 uses an APD receiver. The attenuation value is measured in dB while the receive sensitivity is measured in dBm.

In an embodiment, after the ODN of the PON system is deployed, the optical power loss levels are determined. According to the optical signal attenuation between the OLT and the ONU, the receive sensitivity and the transmit optical power of the ONU can be determined. Moreover, even if all ONUs use the same transmitter, the optical power loss levels can be used to indicate that different ONUs use different transmit optical powers for uplink data transmission, thereby enabling adjustable transmit optical power. The optical power loss level may be embedded in an FS frame, in a PSBd, delivered from the OLT to the ONU through a PLOAM message, or indicated in other manners. In this manner, the difference in optical power received by the OLT receiver from each ONU in the PON system is small, reducing the requirement for power equalization processing on the OLT side and lowering the overall power consumption of the PON system.

In an embodiment, the OLT performs ONU configuration and ONU data reception according to the receive optical power loss level of each ONU.

After the ONU accesses the PON system, during its registration and activation process, the ONU may report the optical power loss level corresponding to its received signal, the optical power loss level corresponding to its transmitted signal, or information related to its receive sensitivity. Alternatively, such information may be reported through a PLOAM message or an ONU Management and Control Interface (OMCI) message when the ONU is in a working state (for example, O5 state). Upon acquiring the information, the OLT may adjust, manually or automatically, the line rate, operating wavelength, FEC coding/decoding scheme, or modulation/demodulation scheme of the ONU to achieve optimized allocation of network resources.

In an embodiment, different uplink and downlink modulation/demodulation schemes may be used according to the optical power loss levels between the OLT and the ONUs.

For an ONU with a low receive optical power loss level, since the optical path loss is small, a higher-order modulation scheme, such as PAM4, may be used to communicate (modulate and demodulate) with the OLT. For an ONU with a high receive optical power loss level, since the optical path loss is large, a lower-order modulation scheme, such as NRZ, may be used to ensure stable transmission and reception.

In the downlink direction, when both high-order and low-order modulated data blocks are present in the same frame, reception according to the optical power loss level is not affected. An ONU with a low optical power loss level can receive the entire data frame, demodulate each block sequentially, and extract and determine whether the demodulated data requires further processing. An ONU with a high optical power loss level may discard the high-order modulated data blocks; or output incorrect results according to the low-order demodulation scheme and then extract the corresponding data blocks according to the indication in the frame.

Different modulation schemes may correspond to different line rates. For example, at the same baud rate, the line rate of PAM4 is twice that of NRZ.

In an embodiment, different FEC protection may be performed on data between the OLT and the ONU according to different optical power loss levels between the OLT and the ONU. For example, a low optical power loss level may correspond to encoding with a high-throughput FEC to further improve the transmission rate while a high optical power loss level may correspond to encoding with a high-redundancy FEC to further enhance the error correction capability.

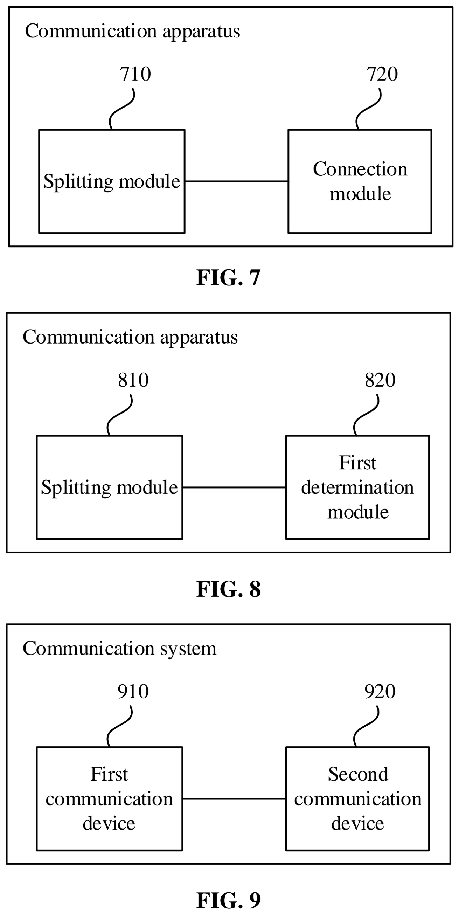

In an embodiment, FIG. 7 is a block diagram of a communication apparatus according to embodiments of the present application. This embodiment is applied to a communication system. As shown in FIG. 7, the communication apparatus of this embodiment includes a splitting module 710 and a connection module 720.

The splitting module 710 is configured to split different optical power loss levels from optical path loss levels formed by a first loss value and a second loss value of an optical distribution network of a passive optical network system. The minimum value and the maximum value of each optical power loss level are each greater than or equal to the first loss value and less than or equal to the second loss value. The first loss value is the minimum optical path loss of the optical distribution network. The second loss value is the maximum optical path loss of the optical distribution network. The connection module 720 is configured to connect different first communication devices to the passive optical network system according to the different optical power loss levels.

In an embodiment, the different first communication devices include first communication devices with different receive sensitivities; or first communication devices with different transmit optical powers.

In an embodiment, the communication apparatus applied to the first communication device in the communication system also includes a reporting module and a receiving module.

The reporting module is configured to report optical power level indication information to a second communication device. The optical power level indication information indicates an optical power loss level used by the first communication device. The receiving module is configured to receive configuration content of the first communication device determined by the second communication device according to the optical power level indication information.

In an embodiment, the optical power level indication information indicates a mapping relationship between an optical power loss level and at least one receive sensitivity.

In an embodiment, the optical power level indication information indicates a mapping relationship between an optical power loss level and at least one transmit optical power.

In an embodiment, in a downlink direction, the configuration content determined according to the optical power level indication information includes at least one of the following: forward error correction (FEC) decoding, a demodulation scheme, a line rate, or an operating wavelength.

In an embodiment, in an uplink direction, the configuration content determined according to the optical power level indication information includes at least one of the following: transmit optical power, FEC coding, a modulation scheme, a line rate, or an operating wavelength.

The communication apparatus of this embodiment is configured to implement the communication method applied to the first communication device according to the embodiment shown in FIG. 1 and has similar implementation principles and technical effects. The details are not repeated here.

In an embodiment, FIG. 8 is a block diagram of a communication apparatus according to embodiments of the present application. This embodiment is applied to a communication system. As shown in FIG. 8, the communication apparatus of this embodiment includes a splitting module 810 and a first determination module 820.

The splitting module 810 is configured to split different optical power loss levels from optical path loss levels formed by a first loss value and a second loss value of an optical distribution network of a passive optical network system. The minimum value and the maximum value of each optical power loss level are each greater than or equal to the first loss value and less than or equal to the second loss value. The first loss value is the minimum optical path loss of the optical distribution network. The second loss value is the maximum optical path loss of the optical distribution network. The first determination module 820 is configured to determine configuration content of a second communication device according to different optical power level indication information. The optical power level indication information indicates an optical power loss level used by a first communication device.

In an embodiment, the communication apparatus applied to the second communication device in the communication system also includes a receiving module and a second determination module.

The receiving module is configured to receive optical power level indication information reported by the first communication device. The second determination module is configured to determine and send configuration content of the first communication device according to the optical power level indication information.

In an embodiment, in a downlink direction, the configuration content determined according to the optical power level indication information includes at least one of the following: forward error correction (FEC) coding, a modulation scheme, a line rate, or an operating wavelength.

In an embodiment, in an uplink direction, the configuration content determined according to the optical power level indication information includes at least one of the following: FEC decoding, a demodulation scheme, a line rate, or an operating wavelength.

In an embodiment, the optical power level indication information indicates a mapping relationship between an optical power loss level and at least one receive sensitivity.

In an embodiment, the optical power level indication information indicates a mapping relationship between an optical power loss level and at least one transmit optical power.

The communication apparatus of this embodiment is configured to implement the communication method applied to the second communication device according to the embodiment shown in FIG. 2 and has similar implementation principles and technical effects. The details are not repeated here.

In an embodiment, FIG. 9 is a block diagram of a communication system according to embodiments of the present application. As shown in FIG. 9, the communication system of this embodiment includes a first communication device 910 and a second communication device 920. A receive sensitivity of the first communication device 910 corresponds to at least one optical power loss level; or a transmit optical power of the first communication device 910 corresponds to an optical power loss level. The first communication device 910 is configured to report an optical power loss level and receive configuration content sent by the second communication device 920. The second communication device 920 is configured to determine and send configuration content of each first communication device 910 according to the optical power loss level of each first communication device 910. The second communication device 920 is also configured to perform corresponding configuration and data transmission of the second communication device 920 according to the optical power loss level of each first communication device 910.

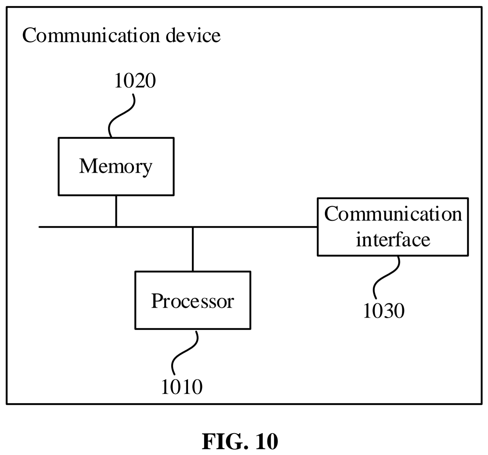

In an embodiment, FIG. 10 is a diagram illustrating the structure of a communication device according to embodiments of the present application. As shown in FIG. 10, the device of the present application includes a processor 1010, a memory 1020, and a communication interface 1030. One or more processors 1010 may be provided in the device. FIG. 10 shows one processor 1010 as an example. One or more memories 1020 may be provided in the device. FIG. 10 shows one memory 1020 as an example. The processor 1010, the memory 1020, and the communication interface 1030 of the device may be connected by a bus or otherwise. FIG. 10 uses connection by a bus as an example. In this embodiment, the device may be a first communication device.

As a computer-readable storage medium, the memory 1020 may be configured to store software programs and computer-executable programs and modules, such as program instructions/modules (for example, the splitting module 710 and the connection module 720 in the communication apparatus) corresponding to the device according to any embodiment of the present application. The memory 1020 may include a program storage region and a data storage region. The program storage region may store an operating system and an application program required by at least one function. The data storage region may store data created according to the use of the device. Additionally, the memory 1020 may include a high-speed random-access memory and may also include a nonvolatile memory such as at least one disk memory, a flash memory, or another nonvolatile solid-state memory. In some examples, memories 1020 remote from the processor 1010 and connectable to the device via a network may be provided. Examples of the network include, but are not limited to, the Internet, an intranet, a local area network, a mobile communication network, and a combination thereof. The communication interface 1030 is configured to enable a communicative connection between the first communication device and the second communication device.

When the communication device is the first communication node, the device may be configured to perform the communication method applied to the communication system and the communication method applied to the first communication device in the communication system according to any previous embodiment and has corresponding functions and effects.

When the communication device is the second communication node, the device may be configured to perform another communication method applied to the communication system and the communication method applied to the second communication device in the communication system according to any previous embodiment and has corresponding functions and effects.

Embodiments of the present application also provide a storage medium including computer-executable instructions. The computer-executable instructions are configured to, when executed by a computer processor, cause the computer processor to perform a communication method applied to a communication system. The method applied to a communication system includes splitting different optical power loss levels from optical path loss levels formed by a first loss value and a second loss value of an optical distribution network of a passive optical network system, where the minimum value and the maximum value of each optical power loss level are each greater than or equal to the first loss value and less than or equal to the second loss value, the first loss value is the minimum optical path loss of the optical distribution network, and the second loss value is the maximum optical path loss of the optical distribution network; and connecting different first communication devices to the passive optical network system according to the different optical power loss levels.

Embodiments of the present application also provide a storage medium including computer-executable instructions. The computer-executable instructions are configured to, when executed by a computer processor, cause the computer processor to perform another communication method applied to a communication system. The method applied to a communication system includes splitting different optical power loss levels from optical path loss levels formed by a first loss value and a second loss value of an optical distribution network of a passive optical network system, where the minimum value and the maximum value of each optical power loss level are each greater than or equal to the first loss value and less than or equal to the second loss value, the first loss value is the minimum optical path loss of the optical distribution network, and the second loss value is the maximum optical path loss of the optical distribution network; and determining configuration content of a second communication device according to different optical power level indication information, where the optical power level indication information indicates an optical power loss level used by a first communication device.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A communication method, applied to a communication system, comprising:
splitting different optical power loss levels from optical path loss levels formed by a first loss value and a second loss value of an optical distribution network of a passive optical network system, wherein a minimum value and a maximum value of each optical power loss level are each greater than or equal to the first loss value and less than or equal to the second loss value, the first loss value is a minimum optical path loss of the optical distribution network, and the second loss value is a maximum optical path loss of the optical distribution network; and
connecting different first communication devices to the passive optical network system according to the different optical power loss levels.

2. The method of claim 1, wherein the different first communication devices comprise first communication devices with different receive sensitivities; or first communication devices with different transmit optical powers.

3. The method of claim 1, applied to a first communication device in the communication system, further comprising:
reporting optical power level indication information to a second communication device, wherein the optical power level indication information indicates an optical power loss level used by the first communication device; and
receiving configuration content of the first communication device determined by the second communication device according to the optical power level indication information.

4. The method of claim 3, wherein the optical power level indication information indicates a mapping relationship between an optical power loss level and at least one receive sensitivity.

5. The method of claim 3, wherein the optical power level indication information indicates a mapping relationship between an optical power loss level and at least one transmit optical power.

6. The method of claim 3, wherein in a downlink direction, the configuration content determined according to the optical power level indication information comprises at least one of the following: forward error correction decoding, a demodulation scheme, a line rate, or an operating wavelength.

7. The method of claim 3, wherein in an uplink direction, the configuration content determined according to the optical power level indication information comprises at least one of the following: transmit optical power, forward error correction coding, a modulation scheme, a line rate, or an operating wavelength.

8. A communication method, applied to a communication system, comprising:
splitting different optical power loss levels from optical path loss levels formed by a first loss value and a second loss value of an optical distribution network of a passive optical network system, wherein a minimum value and a maximum value of each optical power loss level are each greater than or equal to the first loss value and less than or equal to the second loss value, the first loss value is a minimum optical path loss of the optical distribution network, and the second loss value is a maximum optical path loss of the optical distribution network; and
determining configuration content of a second communication device according to different optical power level indication information, wherein optical power level indication information of the different optical power level indication information indicates an optical power loss level used by a first communication device.

9. The method of claim 8, applied to the second communication device in the communication system, further comprising:
receiving the optical power level indication information reported by the first communication device; and
determining and sending configuration content of the first communication device according to the optical power level indication information.

10. The method of claim 8, wherein in a downlink direction, the configuration content determined according to the optical power level indication information comprises at least one of the following: forward error correction coding, a modulation scheme, a line rate, or an operating wavelength.

11. The method of claim 8, wherein in an uplink direction, the configuration content determined according to the optical power level indication information comprises at least one of the following: forward error correction decoding, a demodulation scheme, a line rate, or an operating wavelength.

12. A first communication device, comprising a memory and at least one processor, wherein
the memory is configured to store at least one program; and
when executed by the at least one processor, the at least one program causes the at least one processor to perform the communication method of any one of claims 1 to 7.

13. A second communication device, comprising a memory and at least one processor, wherein
the memory is configured to store at least one program; and
when executed by the at least one processor, the at least one program causes the at least one processor to perform the communication method of any one of claims 8 to 11.

14. A communication system, comprising a first communication device and a second communication device, wherein
a receive sensitivity of the first communication device corresponds to at least one optical power loss level; or a transmit optical power of the first communication device corresponds to an optical power loss level;
the first communication device is configured to report an optical power loss level and receive configuration content sent by the second communication device;
the second communication device is configured to determine and send configuration content of each first communication device according to an optical power loss level of each first communication device; and
the second communication device is further configured to perform corresponding configuration and data transmission of the second communication device according to the optical power loss level of each first communication device.

15. A storage medium storing a computer program which, when executed by a processor, causes the processor to perform the communication method of any one of claims 1 to 7 or the communication method of any one of claims 8 to 11.
